# FASCICULE DE BREVET EUROPEEN

(11) **EP 3 381 747 B1**
(45) Date de publication et mention de la délivrance du brevet: **25.05.2022**
(21) Numéro de dépôt: 18163351.2
(22) Date de dépôt: 22.03.2018
(51) Int. Cl.: B60Q 1/04, F16B 5/07, F16B 5/06

(54) **ÉLÉMENT DE FIXATION D'UN PROJECTEUR D'UN VÉHICULE**
BEFESTIGUNGSELEMENT EINES SCHEINWERFERS EINES FAHRZEUGS
DEVICE FOR ATTACHING A HEADLIGHT TO A VEHICLE

(30) Priorité: 30.03.2017 FR 1752720
(43) Date de publication de la demande: 03.10.2018
(73) Titulaire: Valeo Vision, 93012 Bobigny Cedex (FR)
(72) Inventeur: TROTTIER, Samuel, 49000 Angers (FR)
(74) Mandataire: Valeo Visibility

(56) Documents cités:
- DE-A1- 10 236 105
- DE-A1-102011 011 121
- FR-A1- 2 981 318
- FR-A1- 2 985 472
- FR-A1- 3 038 289
- JP-A- 2007 090 916
- JP-A- 2011 121 399

## Description

La présente invention concerne un élément de fixation d'un projecteur d'un véhicule. L'invention concerne également un projecteur d'un véhicule comprenant un tel élément de fixation. L'invention concerne également un véhicule comprenant un tel projecteur ou un tel élément de fixation. Enfin, l'invention concerne un procédé de fabrication d'un tel projecteur.

Lors de la conception d'un véhicule, les constructeurs doivent tenir compte des contraintes de sécurité passive en cas de collision contre un piéton. En effet, même à basse vitesse le choc d'un véhicule contre un piéton peut entrainer de graves blessures du piéton. Un tel choc peut se produire au niveau d'un projecteur du véhicule.

En outre, les projecteurs d'un véhicule sont eux même des éléments de sécurité active et passive car ils permettent au conducteur de s'éclairer la nuit et au véhicule d'être correctement vu. Le bon fonctionnement du projecteur, y compris après un choc, est donc également un élément de sécurité important dont doit tenir compte la conception du projecteur.

Un premier objet de l'invention est de fournir une solution de projecteur pour véhicule automobile permettant d'assurer au mieux la sécurité en cas de choc avec un piéton.

Un second objet de l'invention est de de fournir une solution de projecteur améliorant le fonctionnement général du projecteur, notamment sa tenue au choc, et proposant un montage et une éventuelle réparation peu onéreuse suite à un choc.

A cet effet, l'invention se rapporte à un élément de fixation pour fixer un projecteur sur un véhicule, notamment un projecteur à l'avant d'un véhicule, apte à être disposé sous un projecteur et comprenant un composant fusible comportant au moins une zone sécable ou déformable pour permettre un déplacement d'un projecteur avec une composante verticale vers le bas par rapport à un véhicule lors d'une collision d'un véhicule, notamment lors d'un choc piéton.

Un tel élément de fixation est connu du document FR 2 985 472 A1.

L'élément de fixation selon l'invention comprend les caractéristiques techniques définies dans la revendication 1.

Le composant fusible peut comprendre une paroi inférieure à partir de laquelle s'étendent vers le haut deux parois latérales, dont l'extrémité supérieure est apte à une liaison avec la surface inférieure d'un projecteur, et le composant fusible peut comprendre deux zones sécables comprenant chacune au moins une encoche formant au moins un point de fragilité du composant fusible, disposées respectivement à proximité de la jonction entre chaque paroi latérale et la paroi inférieure, de sorte qu'un choc de type choc piéton transmis depuis le haut sur l'élément de fixation provoque la cassure des zones sécables.

Le composant fusible peut comprendre :
- deux parois latérales sensiblement parallèles à un plan longitudinal et vertical,
- une paroi inférieure sensiblement parallèle à un plan horizontal,
- une ouverture vers l'avant et une ouverture vers l'arrière.

Le composant fusible peut être de forme profilée et orienté selon un axe longitudinal.

Selon l'invention, l'élément de fixation comprend un logement de fixation comprenant un élément de liaison destiné à lier l'élément de fixation à une carrosserie d'un véhicule, le composant fusible étant positionné au dessus du logement de fixation de sorte que le composant fusible descend vers le logement de fixation lors d'un choc, le logement de fixation se trouvant alors tout ou partiellement logé entre deux parois latérales du composant fusible suite à un choc.

Le logement de fixation peut comprendre une ouverture vers l'avant et une ouverture vers l'arrière, orientées selon l'axe longitudinal, formant un espace d'insertion pour recevoir un appendice de la carrosserie, cet appendice pouvant coopérer avec l'élément de liaison et/ou coulisser longitudinalement à l'intérieur du logement de fixation pour permettre le déplacement d'un projecteur vers l'arrière lors d'une collision du véhicule et/ou lors du montage d'un projecteur sur le véhicule.

L'élément de liaison du logement de fixation peut comprendre au moins une nervure supérieure et au moins une nervure inférieure s'étendant selon l'axe longitudinal, faisant saillie sensiblement verticalement, tournées vers l'intérieur du logement de fixation, l'au moins une nervure supérieure étant destinée à venir en appui contre une face supérieure d'un appendice et l'au moins une nervure inférieure étant destinée à venir en appui contre une face inférieure d'un tel appendice, pour former une liaison rigide selon l'axe vertical entre le logement de fixation et un appendice.

L'élément de liaison peut comprendre une ouverture taraudée destinée à coopérer avec une vis de fixation et un appendice de la carrosserie, l'appendice étant muni d'une ouverture.

Le composant fusible peut comprendre une entretoise s'étendant sous la forme d'un plan compris entre une paroi inférieure et une paroi supérieure du composant fusible, le plan comprenant l'axe longitudinal et étant incliné par rapport à l'axe vertical, l'entretoise comprenant au moins une encoche à une jonction de l'entretoise avec la paroi inférieure et/ou la paroi supérieure du composant fusible formant au moins un point de fragilité de l'entretoise.

L'invention se rapporte également à un projecteur comprenant un boitier renfermant une source lumineuse et comprenant un ou plusieurs éléments de fixation tels que défini(s) précédemment et disposé(s) sous le boitier du projecteur.

Le projecteur peut comprendre un ou plusieurs élément(s) de fixation moulés en une seule et même pièce avec au moins une partie du boitier du projecteur et/ou un ou plusieurs élément(s) de fixation distinct(s) du boitier et fixés sous le boitier.

L'invention se rapporte également à un véhicule comprenant une carrosserie et un projecteur tel que défini précédemment, le projecteur étant fixé à la carrosserie au moyen d'un appendice de la carrosserie coopérant avec un logement de fixation d'un élément de fixation tel que défini précédemment.

L'invention se rapporte également à un procédé de fabrication d'un projecteur tel que défini précédemment comprenant une étape d'injection plastique lors de laquelle le boitier et au moins un élément de fixation sont injectés dans un même moule d'injection.

Ces objets, caractéristiques et avantages de la présente invention seront exposés en détail dans la description suivante de deux modes de réalisation particuliers faits à titre non-limitatif en relation avec les figures jointes parmi lesquelles :
La figure 1 est une vue symbolique de côté d'un véhicule automobile équipé d'un projecteur et d'un élément de fixation selon un mode de réalisation de l'invention.
La figure 2 est une vue schématique en perspective d'un premier mode de réalisation d'un élément de fixation pour projecteur de véhicule.
La figure 3 est une vue schématique de face du premier mode de réalisation de l'élément de fixation pour projecteur de véhicule.
La figure 4 est une vue schématique de face du premier mode de réalisation de l'élément de fixation pour projecteur de véhicule, selon une configuration consécutive à un choc piéton du projecteur de véhicule.
La figure 5 est une vue schématique en perspective d'une encoche sur une zone sécable de l'élément de fixation selon le premier mode de réalisation de l'invention.
La figure 6 est une vue en coupe de coté du premier mode de réalisation de l'élément de fixation et d'un appendice de la carrosserie du véhicule.
La figure 7 est une vue en coupe de face d'un élément de fixation selon un deuxième mode de réalisation de l'invention.
La figure 8 est une vue schématique en perspective de l'élément de fixation selon le deuxième mode de réalisation de l'invention.
La figure 9 est une vue symbolique du dessous d'un projecteur équipé de deux éléments de fixation selon un mode de réalisation de l'invention.

Sur l'ensemble des figures et de la description, la gauche et la droite sont définies selon le point de vue d'un conducteur. L'axe X désigne l'axe longitudinal du véhicule. En marche avant et en ligne droite, le véhicule progresse de l'arrière vers l'avant selon une direction parallèle à son axe longitudinal. L'axe X est orienté de l'avant vers l'arrière du véhicule, c'est-à-dire dans le sens de la marche arrière. L'axe Y désigne l'axe transversal du véhicule. L'axe Y est orienté de la gauche vers la droite. L'axe Z désigne l'axe perpendiculaire à l'axe X et à l'axe Y. L'axe Z est un axe vertical lorsque le véhicule repose sur un sol horizontal. L'axe Z est orienté de bas en haut. Les axes X, Y et Z forment un repère orthonormé direct. Sur l'ensemble des figures et de la description, on considère que le véhicule repose sur un sol horizontal. D'autre part, dans un souci de simplification de la description, ce même repère, défini par référence à un véhicule, sera aussi utilisé pour un projecteur et un élément de fixation pour projecteur, même considérés hors d'un véhicule, puisqu'ils sont destinés à un montage selon une orientation spécifique sur un véhicule.

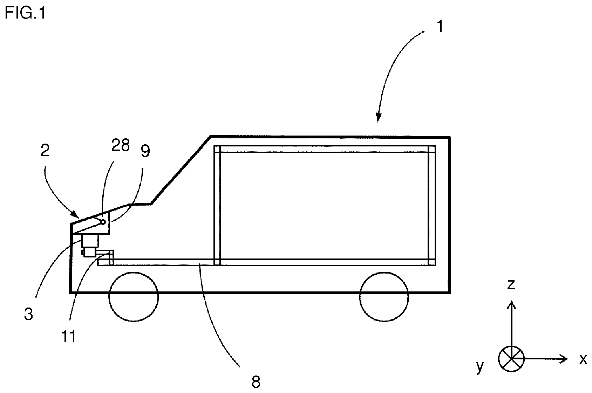

La figure 1 illustre symboliquement un véhicule 1 équipé d'un projecteur 2 à l'avant du véhicule 1 et d'un élément de fixation 3 du projecteur 2 sur le véhicule 1. On considère un projecteur comme tout équipement du véhicule muni d'une source lumineuse 28. Un projecteur peut être par exemple un feu de route, un feu de croisement, un feu clignotant ou un feu de brouillard. En variante, l'invention pourrait être transposée à un projecteur à l'arrière du véhicule.

Le projecteur 2 comprend un boitier 9 enveloppant la source lumineuse 28. Le boitier du projecteur et l'élément de fixation 3 sont préférentiellement réalisés en plastique injecté mais pourraient être réalisés en tout autre matériau et/ou comprendre des armatures de rigidification métalliques noyées dans le plastique. Le boitier du projecteur et l'élément de fixation peuvent être moulés ensemble lors du même procédé d'injection. Le projecteur peut être de forme quelconque. Le projecteur 2 comprend au moins une face transparente ou translucide. Cette face s'étend généralement dans un plan incliné par rapport à l'axe vertical Z. En cas de collision contre le projecteur, par exemple en cas de choc piéton, un effort peut être transmis directement ou indirectement sur le projecteur. L'effort est transmis directement si un élément extérieur tel qu'un piéton exerce un effort sur le projecteur. L'effort est transmis indirectement si un élément du véhicule se déplace consécutivement à une collision et vient en appui contre le projecteur. Cet effort peut être orienté sensiblement perpendiculairement à la face du projecteur 2 contre laquelle a eu lieu le choc, et donc comprendre une composante du haut vers le bas et/ou de l'avant vers l'arrière sur le projecteur.

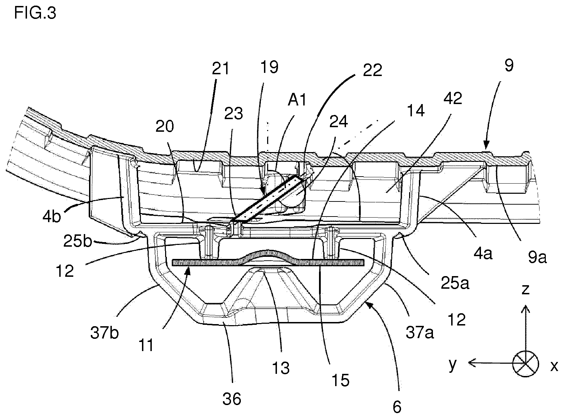

Le boitier 9 du projecteur peut comprendre une face inférieure 9a sensiblement horizontale, plane ou crénelée comme représenté sur la figure 3. L'élément de fixation 3 est disposé sous le projecteur 2. L'élément de fixation 3 fait saillie vers le bas depuis la face inférieure 9a du boitier 9. Les dimensions de l'élément de fixation 3 selon les axes longitudinal X et transversal Y sont inférieures à celles du projecteur. L'élément de fixation ne dépasse pas sur les cotés, devant ou derrière le projecteur 2. Les dimensions comparatives de l'élément de fixation et du projecteur permettent d'envisager la disposition de plusieurs éléments de fixation similaires sous le projecteur 2, sur la face inférieure 9a. Le véhicule 1 est formé d'une carrosserie 8. L'élément de fixation 3 permet de fixer le projecteur 2 à la carrosserie 8.

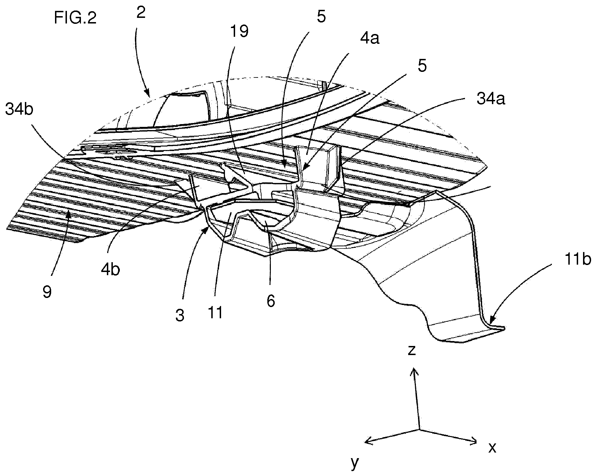

Comme particulièrement bien visible sur les figures 2 et 3, l'élément de fixation 3 comprend un composant fusible 5 et un logement de fixation 6. Le composant fusible 5 est disposé au-dessus du logement de fixation 6. Le composant fusible 5 comprend au moins une zone sécable pour permettre la cassure du composant fusible en cas de choc. Selon le mode de réalisation représenté, le composant fusible comprend deux zones sécables, l'une sur un coté droit et l'autre sur un coté gauche. On entend par zone sécable une zone fragile ou frangible du composant fusible. Le composant fusible est le premier composant de l'élément de fixation 3 à casser lors d'un choc. Il est dimensionné de sorte à casser dès que la force du choc atteint une valeur donnée. Pour cela, le fabriquant peut par exemple ajuster le choix du matériau plastique et/ou ajuster les épaisseurs de matière composant les zones sécables et/ou disposer un ou plusieurs points de fragilité dans au moins une zone sécable. Ces points de fragilité peuvent être par exemple une arrête vive, une entaille ou une encoche 25a, 25b, comme sur le mode de réalisation. Grâce aux points de fragilité disposés sur le composant fusible, le mode de rupture de l'élément de fixation peut être prédit. Lorsque le composant fusible est cassé, l'élément de fixation se trouve composé de deux parties séparées, une première partie haute correspondant au composant fusible, liée au projecteur, et une deuxième partie basse liée à la carrosserie du véhicule : la cassure du composant fusible autorise le déplacement vers le bas de la première partie vers la deuxième partie, induisant un déplacement relatif vers le bas du projecteur par rapport à la carrosserie 8, selon une course prédéfinie et maitrisée. En variante, le composant fusible peut être pourvu d'au moins une zone déformable en lieu et place de l'au moins une zone sécable pour permettre un déplacement relatif similaire du projecteur par rapport à la carrosserie 8.

Selon le mode de réalisation, le composant fusible 5 comprend deux parois latérales 4a, 4b, une paroi inférieure 20 et éventuellement une paroi supérieure 21. Les parois du composant fusible délimitent un espace intérieur 42. Le composant fusible 5 peut avoir une forme sensiblement parallélépipédique. Les parois latérales s'étendent selon un plan sensiblement parallèle au plan comprenant l'axe longitudinal X et l'axe vertical Z. On peut distinguer une paroi gauche 4a et une paroi droite 4b. Les parois latérales peuvent être pourvues d'un ou plusieurs contreforts 34a, 34b augmentant la robustesse des parois latérales. Les parois inférieure 20 et supérieure 21 s'étendent selon un plan sensiblement horizontal. Comme c'est le cas dans le mode de réalisation présenté, la paroi supérieure 21 du composant fusible peut être confondue avec la face inférieure 9a du boitier du projecteur. Le composant fusible comprend deux zones sécables agencées respectivement sur chaque partie latérale de la paroi inférieure 20. Ces zones sécables sont munies d'un point de fragilité formé par respectivement une encoche 25a, 25b. La zone centrale de la paroi inférieure 20 forme une paroi de liaison entre le composant fusible 5 et le logement de fixation 6. Les parois latérales 4a, 4b relient la face inférieure 9a du boitier 9 au logement de fixation 6. L'épaisseur des différentes parois est sensiblement uniforme à l'exception du ou des points de fragilité.

Le composant fusible 5 est ouvert à l'avant et à l'arrière. Ainsi, le composant fusible 5 est de forme profilée et orienté selon un axe longitudinal X. La forme profilée est une forme tubulaire avec une section globalement rectangulaire. La hauteur du composant fusible 5 peut être approximativement égale à la moitié de la hauteur totale de l'élément de fixation 3. La forme profilée du composant fusible 5 est compatible avec un procédé de fabrication par injection dans un moule.

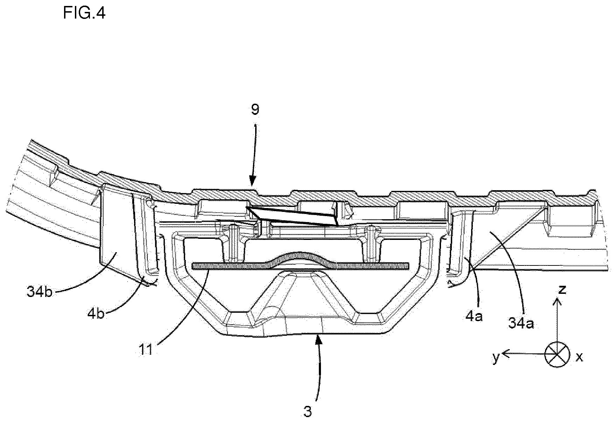

Le composant fusible 5 est intercalé verticalement entre le boitier 9 du projecteur 2 et le logement de fixation 6. Le logement de fixation 6 comprend un élément de liaison à la carrosserie 8 du véhicule 1. La longueur du logement de fixation 6 peut être approximativement égale à la longueur de l'élément de fixation 3. La hauteur du logement de fixation 6 peut être approximativement égale à la moitié de la hauteur de l'élément de fixation 3. La largeur du logement de fixation 6 peut être approximativement égale à la largeur de la zone centrale de la paroi inférieure 20 du composant fusible 5. En cas de collision et comme illustré à la figure 4, le logement de fixation 6 pénètre entre les parois latérales 4a, 4b du composant fusible.

De manière analogue au composant fusible 5, le logement de fixation 6 est ouvert vers l'avant et vers l'arrière. Il est de forme profilée et orienté selon un axe longitudinal X. La forme profilée est une forme tubulaire avec une section extérieure grossièrement trapézoïdale. Une paroi supérieure, confondue avec la zone centrale de la paroi inférieure 20 du composant fusible 5, correspond à la grande base du trapèze. Une paroi inférieure 36 correspond à la petite base du trapèze. Les parois latérales 37a, 37b correspondent aux autres cotés du trapèze. Les parois latérales peuvent comprendre une portion coudée. Les épaisseurs des parois du logement de fixation peuvent être sensiblement identiques aux épaisseurs des parois du composant fusible.

Le logement de fixation 6 forme un élément de liaison au sein de l'espace délimité par les parois du logement de fixation. Cet élément de liaison peut être tout élément permettant une fixation à la carrosserie 8 d'un véhicule. Il peut par exemple comprendre tout élément mécanique de fixation, comme un vissage, un clip de fixation, un frettage, un emboitement. Le mécanisme de fixation peut comprendre un blocage en position et en rotation selon les trois axes X, Y et Z ou comprendre une glissière et/ou un pivot selon un ou plusieurs axes. Un premier mode de réalisation d'un mécanisme de fixation par emboitement est décrit ci-dessous et un deuxième mode de réalisation par vissage sera détaillé par la suite.

Selon ce premier mode de réalisation illustré sur les figures 2 à 6, l'élément de liaison du logement de fixation 6 comprend deux nervures supérieures 12 et une nervure inférieure 13 solidaires du logement de fixation 6. En variante, l'élément de liaison pourrait comprendre une nervure supérieure et deux nervures inférieures ou bien un nombre quelconque de nervures inférieures et supérieures. Selon le mode de réalisation, les nervures supérieures 12 font saillie verticalement vers le bas depuis la paroi supérieure 20 du logement de fixation 6, symétriquement réparties par rapport au centre de cette paroi. La nervure inférieure 13 fait saillie verticalement vers le haut depuis le milieu de la paroi inférieure 36 du logement de fixation 6. Les nervures supérieures et inférieure s'étendent selon l'axe longitudinal X. L'espace intérieur du logement de fixation 6 à une forme profilée avec une section en forme de « W ». L'extrémité inférieure des deux nervures supérieures 12 est positionnée légèrement au-dessus de l'extrémité supérieure de la nervure inférieure 13. L'écart entre ces extrémités des deux nervures supérieures et de la nervure inférieure délimite un espace prévu pour la réception d'un appendice 11 de carrosserie pour sa liaison.

Préférentiellement, l'appendice 11 est une lame métallique s'étendant globalement longitudinalement selon un plan horizontal et vers l'avant du véhicule, d'épaisseur sensiblement égale à l'espace formé par les extrémités des nervures 12, 13, de sorte à être inséré entre les nervures supérieures et inférieure. L'appendice peut être de n'importe quelle forme. Par exemple, l'appendice peut avoir une section constante selon l'axe longitudinal ou bien comprendre une variation de section. Ce mécanisme de fixation à la carrosserie, par la liaison entre l'élément de fixation 3 et l'appendice 11 solidaire de la carrosserie 8, permet de fixer la hauteur du projecteur 2 selon l'axe vertical Z. De plus, ce mécanisme de fixation permet un ajustement de la position du projecteur selon l'axe longitudinal X et l'axe transversal Y.

Comme représenté par la figure 2, l'appendice 11 est fixé à la carrosserie par une extrémité arrière 11b. Une fois inséré dans le logement de fixation 6, une face supérieure 14 de l'appendice 11 est en appui contre les nervures supérieures 12 et une face inférieure 15 est en appui contre la nervure inférieure 13. Les nervures supérieures 12 exercent un effort vertical dirigé vers le bas sur l'appendice. La nervure inférieure 13 exerce un effort vertical dirigé vers le haut sur l'appendice. L'appendice 11 est bloqué en rotation autour d'un axe longitudinal et bloqué en position selon l'axe vertical Z par les trois nervures. L'appendice 11 est destiné à être inséré longitudinalement dans le logement de fixation 6.

La largeur de l'appendice 11 est supérieure à la distance séparant les deux nervures supérieures 12. La largeur de l'appendice 11 peut être inférieure à la distance séparant les deux parois latérales du logement de fixation 6. Ainsi la liaison formée par l'appendice et le logement de fixation peut permettre un ajustement de la position du projecteur selon l'axe transversal Y lors du montage du projecteur ou un déplacement du projecteur selon l'axe transversal Y consécutivement à une collision.

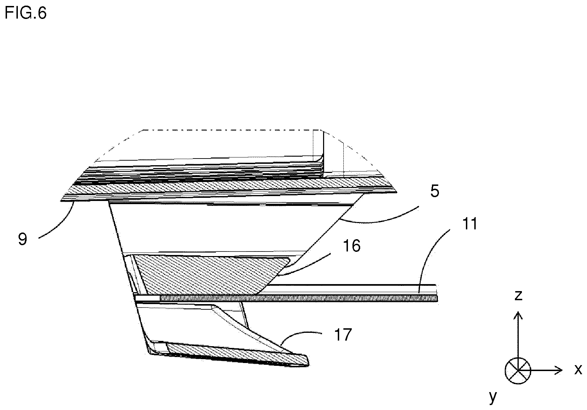

Selon une variante de réalisation, l'appendice 11 pourrait être destiné à être inséré transversalement ou selon tout autre axe horizontal à l'intérieur du logement de fixation. Dans une telle configuration, l'élément de fixation serait également orienté selon l'axe dans lequel s'étend l'appendice. Comme illustré sur la figure 6, les parois latérales du logement de fixation ainsi que les nervures supérieures 12 comprennent un premier bord 16 disposé du coté de l'ouverture arrière et disposé verticalement au dessus de l'emplacement destiné à insérer l'appendice 11. Les parois latérales du logement de fixation ainsi que la nervure inférieure 13 comprennent un deuxième bord 17 disposé du coté de l'ouverture arrière et disposé verticalement en dessous de l'emplacement destiné à insérer l'appendice 11. Le premier bord 16 est incliné vers le bas et vers l'avant du véhicule. Le deuxième bord 17 est incliné vers le haut et vers l'avant du véhicule. L'association du premier bord 16 et du deuxième bord 17 forme un effet d'entonnoir pour guider l'appendice 11 vers son emplacement à l'intérieur du logement de fixation. Ainsi, l'assemblage du projecteur sur le véhicule est facilité.

En cas de collision et comme illustré à la figure 4, le composant fusible 5 casse au niveau de ses zones sécables, au niveau des encoches 25a, 25b. Ces cassures permettent de séparer l'élément de fixation 3 en deux parties distinctes, correspondant respectivement au composant fusible 5 et au logement de fixation 6. Comme décrit précédemment, ces cassures sont positionnées sur les parties latérales de la paroi 20 formant la liaison entre le composant fusible 5 et le logement de fixation 6, plus précisément à l'extérieur des parois latérales 37a, 37b du logement de fixation 6, qui est moins large que le composant fusible 5. Par cette configuration, le composant fusible, soumis à un effort comprenant une composante verticale lors d'une collision, notamment avec un piéton, induit un déplacement vers le bas du composant fusible 5, dont les deux parois latérales 4a, 4b descendent de part et d'autre des parois latérales 37a, 37b du logement de fixation 6. La paroi supérieure 21 descend ainsi vers la paroi inférieure 20. L'espace intérieur 42 du composant fusible se réduit, voir s'annule, et reçoit tout ou partie du logement de fixation 6, qui reste immobile selon sa position verticale Z définie par l'appendice 11 de la carrosserie 8. Le déplacement du projecteur selon l'axe vertical Z est donc sensiblement de l'ordre de grandeur de la distance séparant la paroi supérieure 21 de la paroi inférieure 20 avant rupture. La distance séparant la paroi supérieure 21 de la paroi inférieure 20 avant rupture est définie en fonction du besoin de déplacement du projecteur du haut vers le bas consécutivement à une collision. Ce déplacement vers le bas du projecteur est compris entre 10 à 15mm inclus mais pourrait être encore plus grande. Suite à la rupture de l'élément de fixation 3 lors d'une collision, le projecteur 2 est finalement maintenu verticalement par la paroi inférieure 20 et transversalement entre les deux parois latérales 37a, 37b. Le déplacement du projecteur est limité et maitrisé ce qui permet d'éviter d'endommager le boitier.

En complément, selon le mode de réalisation de l'invention, le composant fusible 5 comprend une entretoise 19 s'étendant sous la forme d'un plan compris entre la paroi inférieure 20 et la paroi supérieure 21 du composant fusible 5. Le plan de l'entretoise 19 est orienté selon l'axe longitudinal X et présente par rapport à l'axe vertical Z une inclinaison A1 comprise entre 20° et 70°, approximativement de 45°. L'entretoise est disposée sensiblement au centre de l'espace 42 délimité par les parois du composant fusible. En variante, l'entretoise 19 pourrait ne pas être de forme plane tout en gardant une forme profilée selon l'axe longitudinal. La forme profilée selon l'axe longitudinal permet le démoulage de l'élément de fixation 3 selon l'axe longitudinal lors d'un procédé de fabrication par injection de plastique. En variante, l'entretoise pourrait également ne pas être disposée au centre de l'espace 42 délimité par les parois du composant fusible mais déportée sur un coté gauche ou sur un côté droit de l'espace 42. Le positionnement de l'entretoise 19 est tel que l'appendice 11 ne peut pas être inséré dans l'espace 42. L'entretoise 19 remplit ainsi une fonction de détrompeur lors du montage du projecteur. Elle permet en effet d'éviter que l'appendice 11 de carrosserie soit inséré dans l'espace 42 délimité par les parois du composant fusible.

L'entretoise 19 comprend au moins une encoche, deux encoches 22, 23 selon le mode de réalisation présenté. Une encoche 22 est disposée à la jonction de l'entretoise 19 et de la paroi supérieure 21. L'autre encoche 23 est disposée à la jonction de l'entretoise 19 et de la paroi inférieure 20. Les encoches de l'entretoise constituent des points de fragilité de l'entretoise. Ainsi en cas de collision contre le projecteur, l'entretoise peut se désolidariser des parois supérieures et inférieures du composant fusible. Une fois désolidarisée, et grâce à son inclinaison A1 originale, l'entretoise 19 bascule naturellement horizontalement contre la paroi inférieure 20 du composant fusible. Ainsi, l'entretoise n'entrave pas le déplacement vers le bas du projecteur consécutivement à une collision. L'entretoise 19 peut contribuer à la résistance du composant fusible ou bien uniquement servir de détrompeur. Dans cette dernière hypothèse les encoches de l'entretoise 22, 23 sont dimensionnées pour casser plus facilement que les deux encoches 25a, 25b des deux zones sécables.

L'entretoise 19 peut comprendre une excroissance 24 s'étendant dans un plan perpendiculaire à l'axe longitudinal X. L'excroissance 24 sert de surface d'appui à un éjecteur d'un moyen de fabrication par injection de plastique. L'excroissance 24 permet de réaliser un démoulage sans déformation ou endommagement de l'entretoise. Comme illustré sur la figure 3, l'excroissance 24 peut être réalisée sous la forme d'un demi-rond s'étendant dans un plan transversal et vertical. L'excroissance est tournée vers la paroi inférieure 20. Préférentiellement l'excroissance 24 est disposée sur un bord avant ou un bord arrière de l'entretoise 19 de manière à ne pas entrer en contact avec la paroi inférieure 20 ou supérieure 21 lorsque l'entretoise bascule consécutivement à une collision. Ainsi, l'excroissance 24 n'entrave pas le basculement à l'horizontale de l'entretoise.

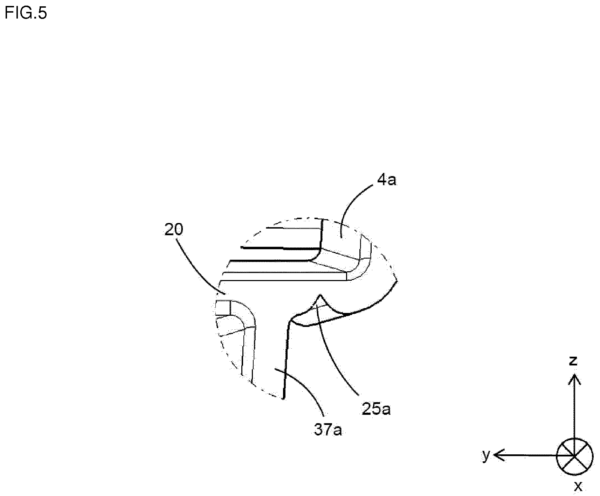

La figure 5 illustre l'encoche 25a formant un point de fragilité au niveau d'une zone sécable du composant fusible 5 selon le mode de réalisation. L'encoche 25b et/ou une encoche de l'entretoise 19 pourraient être réalisées de manière analogue. L'encoche 25a comprend un évidement en forme de « V », qui peut être une saignée s'étendant sur toute la longueur de la zone extérieure de la paroi inférieure 20 suivant l'axe longitudinal X. La profondeur de l'évidement peut atteindre environ mi épaisseur de la paroi inférieure 20. En variante, l'encoche pourrait être plus ou moins profonde afin d'ajuster le seuil de rupture du composant fusible. L'encoche pourrait également s'étendre depuis une face intérieure de la paroi inférieure 20. L'évidement est orienté verticalement. Ainsi, en cas de choc du haut vers le bas sur le projecteur, un effort de cisaillement entre les deux bords de l'encoche apparait et provoque la rupture de la zone extérieure au niveau de l'encoche. La zone sécable est disposée en un point significativement éloigné du boitier du projecteur. Le boitier 9 du projecteur 2 n'est pas endommagé consécutivement à la rupture du composant fusible 5.

Comme cela a été décrit précédemment, l'élément de fixation 3 a une forme profilée compatible avec un procédé d'injection plastique. Le boitier 9 et l'élément de fixation 3 peuvent être injectés dans un même moule d'injection. Ainsi, l'invention porte aussi sur un procédé de fabrication d'un élément de fixation comprenant une étape d'injection, et un procédé de fabrication comprenant une même étape d'injection permettant de fabriquer tout ou partie du boîtier 9 du projecteur et de l'élément de fixation 3 dans un même moule d'injection et/ou une même étape d'injection. Dans ce dernier cas, l'élément de fixation 3 et tout ou partie du boîtier 9 forment un ensemble monobloc. En variante, l'élément de fixation est formé de manière séparée, puis fixé en surface inférieure du boîtier 9 du projecteur par tout moyen.

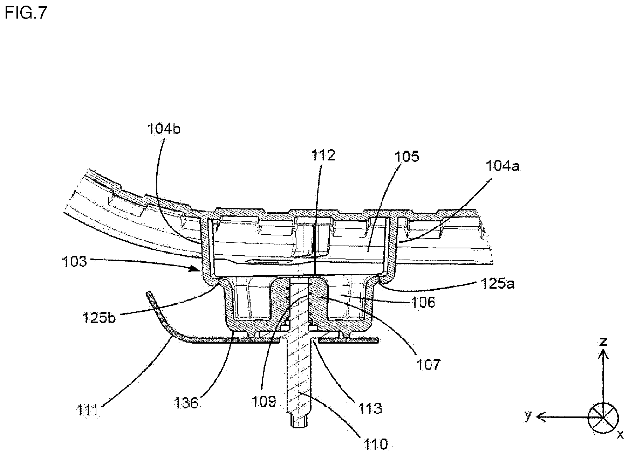

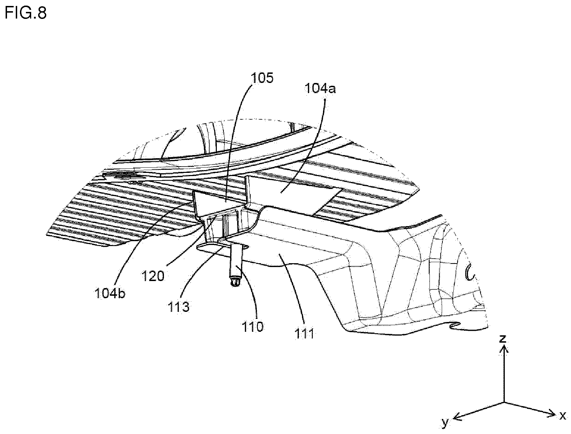

Les figures 7 et 8 illustrent un deuxième mode de réalisation d'un élément de fixation selon l'invention. De manière analogue au premier mode de réalisation, l'élément de fixation 103 comprend un composant fusible 105 et un logement de fixation 106. Le composant fusible 105 comprend deux parois latérales 104a, 104b sensiblement identiques aux parois latérales 4a, 4b du premier mode de réalisation. Le composant fusible 105 comprend une paroi inférieure 120 sensiblement identique à la paroi inférieure 20 du premier mode de réalisation. Le composant fusible 105 comprend également deux zones sécables munies d'encoches 125a, 125b sensiblement identiques aux encoches 25a, 25b du premier mode de réalisation.

En outre, le logement de fixation 106 comprend une portion cylindrique 107 s'étendant verticalement depuis une paroi inférieure 136 du logement de fixation vers le haut, à l'intérieur du logement de fixation 106. La portion cylindrique 107 s'étend sensiblement jusqu'au niveau de la paroi inférieure 120. La portion cylindrique 107 comprend une ouverture taraudée 109 destinée à coopérer avec une vis de fixation 110 et une ouverture 113 disposée sur un appendice 111 de la carrosserie afin de fixer l'élément de fixation 103 à la carrosserie. La vis de fixation 110 comprend une collerette en appui contre une face supérieure de l'appendice 111. Un écrou (non représenté) vissé sur la vis de fixation contre une face inférieure de l'appendice 111 permet de fixer l'appendice 111 à la vis de fixation 110. Ainsi, l'élément de fixation est fixé à l'appendice 111 par l'intermédiaire de la vis de fixation 110.

Une extrémité supérieure 112 de la portion cylindrique 107 est destinée à venir en appui contre la paroi inférieure 9a du projecteur 2 en cas de rupture des zones sécables du composant fusible 105. Ainsi en cas de rupture du composant fusible consécutivement à un choc, le boitier du projecteur descend vers le bas d'une distance sensiblement égale à la distance entre la paroi inférieure 120 et la paroi inférieure 9a du boitier 9 du projecteur 2. Le déplacement vertical du projecteur peut être ajusté en adaptant la hauteur des parois latérales 104a, 104b. L'ouverture 113 de l'appendice 111 peut être une ouverture oblongue débouchant sur une extrémité avant de l'appendice 111. Ainsi, l'appendice 111 peut être inséré longitudinalement dans le logement de fixation 106 muni de la vis de fixation 110. De plus, la forme oblongue de l'ouverture 113 permet un mouvement de recul du projecteur vers l'arrière consécutivement à une collision.

Quel que soit le mode de réalisation illustré, lors d'une collision à l'avant du véhicule, notamment lors d'un choc piéton, un effort avec une composante verticale et optionnellement une composante longitudinale est appliqué sur le projecteur. Lorsque les contraintes dans le plastique au niveau des encoches 25a, 25b, 125a, 125b deviennent trop importantes, le composant fusible 5, 105 se casse ce qui provoque un déplacement vertical du projecteur vers le bas, comme explicité précédemment. En complément, le projecteur peut reculer vers l'arrière par un coulissement entre l'appendice 11, 111 et le logement de fixation 6, 106. Ce déplacement peut être maitrisé par la conception du composant fusible 5, 105, notamment par la définition des hauteurs des parois latérales 4a, 4b, 104a, 104b. Ainsi, le déplacement du projecteur est orienté vers le bas et optionnellement simultanément vers l'arrière, ce qui peut correspondre à l'angle d'incidence d'un choc piéton contre le projecteur.

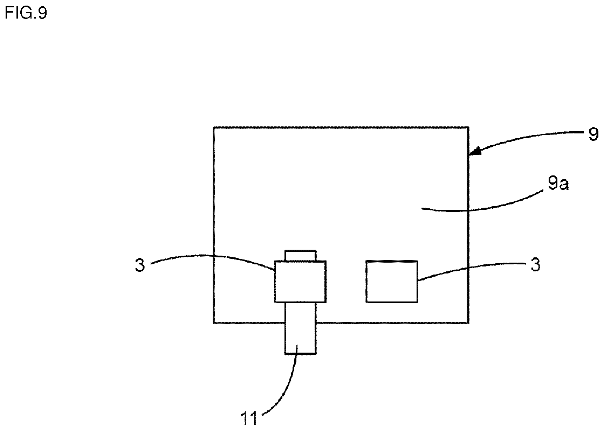

Comme illustré sur la figure 9, le projecteur peut comprendre un ou plusieurs éléments de fixation 3 disposés sur la face inférieure 9a du boitier 9. Par exemple, le projecteur peut comprendre un deuxième élément de fixation 3 disposé à droite ou à gauche du premier élément de fixation. Ainsi en cas de collision ayant entrainé la rupture du composant fusible du premier élément de fixation, il est possible de refixer le projecteur sur le véhicule au moyen du deuxième élément de fixation. A cet effet, l'appendice coopérant initialement avec le premier élément de fixation peut être déplacé ou remplacé afin de coopérer avec le deuxième élément de fixation.

Grâce à l'invention, un projecteur peut donc se déplacer vers le bas de manière contrôlée, et éventuellement vers l'arrière, en cas de collision contre le projecteur, notamment lors d'un choc piéton. La valeur du déplacement est maitrisée par la géométrie de l'élément de fixation, de sorte à garantir un amortissement adapté du choc sur le piéton, tout en préservant au mieux l'intégrité du boitier du projecteur. Placé en-dessous du projecteur, l'élément de fixation ne limite pas l'amplitude du déplacement du projecteur dans le sens longitudinal. L'élément de fixation est peu volumineux et s'intègre facilement dans une carrosserie d'un véhicule. L'élément de fixation peut être fabriqué lors de la même opération d'injection plastique que pour un boitier du projecteur, ce qui est particulièrement économique. L'élément de fixation peut être dédoublé sur le boitier du projecteur afin de faciliter les opérations de réparation consécutivement à une collision.

## Revendications

1. Élément de fixation (3 ; 103) pour fixer un projecteur (2) sur un véhicule (1) reposant sur un sol horizontal et définissant un axe longitudinal (X), un axe transversal (Y) et un axe vertical (Z) perpendiculaire à l'axe longitudinal (X) et à l'axe transversal (Y), notamment un projecteur (2) à l'avant du véhicule (1), l'élément de fixation étant apte à être disposé sous le projecteur (2) et comprenant un composant fusible (5 ; 105) comportant au moins une zone sécable ou déformable pour , lorsque le projecteur est monté sur le véhicule par l'intermédiaire de l'élément de fixation, permettre un déplacement du projecteur (2) avec une composante verticale vers le bas par rapport au véhicule (1) lors d'une collision du véhicule (1), notamment lors d'un choc piéton, **caractérisé en ce que** l'élément de fixation (3 ; 103) comprend un logement de fixation (6 ; 106) comprenant un élément de liaison destiné à lier l'élément de fixation (3 ; 103) à une carrosserie (8) du véhicule (1), le composant fusible (5 ; 105) étant positionné au dessus du logement de fixation (6 ; 106) de sorte que le composant fusible (5 ; 105) descend vers le logement de fixation (6 ; 106) lors de la collision, le logement de fixation (6 ; 106) se trouvant alors tout ou partiellement logé entre deux parois latérales (4a, 4b ; 104a, 104b) du composant fusible (5 ; 105) suite à la collision .

2. Élément de fixation (3 ; 103) selon la revendication précédente, **caractérisé en ce que** , considérant le projecteur en position montée sur le véhicule par l'intermédiaire de l'élément de fixation, le composant fusible (5 ; 105) comprend une paroi inférieure (20 ; 120) à partir de laquelle s'étendent vers le haut deux parois latérales (4a, 4b; 104a, 104b), dont l'extrémité supérieure est apte à une liaison avec la surface inférieure (9a) du projecteur (2), et **caractérisé en ce que** le composant fusible (5 ; 105) comprend deux zones sécables comprenant chacune au moins une encoche (25a, 25b ; 125a, 125b) formant au moins un point de fragilité du composant fusible (5 ; 105), disposées respectivement à proximité de la jonction entre chaque paroi latérale (4a, 4b ; 104a, 104b) et la paroi inférieure (20 ; 120), de sorte qu'une collision de type choc piéton transmis depuis le haut sur l'élément de fixation (3 ; 103) provoque la cassure des zones sécables.

3. Élément de fixation (3 ; 103) selon l'une des revendications
précédentes, **caractérisé en ce que** , considérant le projecteur en position montée sur le véhicule par l'intermédiaire de l'élément de fixation, le composant fusible (5 ; 105) comprend :
- deux parois latérales (4a, 4b ; 104a, 104b) sensiblement parallèles à un plan longitudinal et vertical,
- une paroi inférieure (20 ; 120) sensiblement parallèle à un plan horizontal,
- une ouverture vers l'avant et une ouverture vers l'arrière.

4. Élément de fixation (3 ; 103) selon l'une des revendications précédentes, **caractérisé en ce que** le composant fusible (5) est de forme profilée et orienté selon l'axe longitudinal (X).

5. Élément de fixation (3 ; 103) selon l'une des revendications précédentes, **caractérisé en ce que**, considérant le projecteur en position montée sur le véhicule par l'intermédiaire de l'élément de fixation, le logement de fixation (6) comprend une ouverture vers l'avant et une ouverture vers l'arrière, orientées selon l'axe longitudinal (X), formant un espace d'insertion pour recevoir un appendice (11) de la carrosserie (8), cet appendice (11) pouvant coopérer avec l'élément de liaison et/ou coulisser longitudinalement à l'intérieur du logement de fixation (6) pour permettre le déplacement du projecteur (2) vers l'arrière lors de la collision du véhicule (1) et/ou lors du montage du projecteur (2) sur le véhicule (1).

6. Élément de fixation (3 ; 103) selon la revendication précédente, **caractérisé en ce que** , considérant le projecteur en position montée sur le véhicule par l'intermédiaire de l'élément de fixation, l'élément de liaison du logement de fixation (6) comprend au moins une nervure supérieure (12) et au moins une nervure inférieure (13) s'étendant selon l'axe longitudinal (X), faisant saillie sensiblement verticalement, tournées vers l'intérieur du logement de fixation (6), l'au moins une nervure supérieure (12) étant destinée à venir en appui contre une face supérieure (14) d'un appendice (11) et l'au moins une nervure inférieure (13) étant destinée à venir en appui contre une face inférieure (15) d'un tel appendice (11), pour former une liaison rigide selon l'axe vertical (Z) entre le logement de fixation (6) et un appendice (11).

7. Élément de fixation (103) selon la revendication 1 à 4, **caractérisé en ce que** l'élément de liaison comprend une ouverture taraudée (109) destinée à coopérer avec une vis de fixation (110) et un appendice (111) de la carrosserie (8), l'appendice (111) étant muni d'une ouverture (113).

8. Élément de fixation (3) selon l'une des revendications précédentes, **caractérisé en ce que** , considérant le projecteur en position montée sur le véhicule par l'intermédiaire de l'élément de fixation, le composant fusible (5) comprend une entretoise (19) s'étendant sous la forme d'un plan compris entre une paroi inférieure (20) et une paroi supérieure (21) du composant fusible (5), le plan comprenant l'axe longitudinal (X) et étant incliné par rapport à l'axe vertical (Z), l'entretoise (19) comprenant au moins une encoche (22, 23) à une jonction de l'entretoise (19) avec la paroi inférieure (20) et/ou la paroi supérieure (21) du composant fusible (5) formant au moins un point de fragilité de l'entretoise (19).

9. Projecteur (2) comprenant un boitier (9) renfermant une source lumineuse (28), **caractérisé en ce qu'**il comprend un ou plusieurs éléments de fixation (3 ; 103) selon une des revendications précédentes disposé(s) sous le boitier (9) du projecteur (2).

10. Projecteur (2) selon la revendication précédente, **caractérisé en ce que** les éléments de fixation (3) sont moulés en une seule et même pièce avec au moins une partie du boitier (9) du projecteur et/ou sont distincts du boitier (9) et fixés sous le boitier (9).

11. Véhicule (1) comprenant une carrosserie (8) **caractérisé en ce qu'**il comprend un projecteur (2) selon l'une des revendications 9 ou 10, le projecteur (2) étant fixé à la carrosserie (8) au moyen d'un appendice (11 ; 111) de la carrosserie (8) coopérant avec un logement de fixation (6 ; 106) d'un élément de fixation (3 ; 103) selon l'une des revendications 1 à 8.

12. Procédé de fabrication d'un projecteur (2) selon l'une des revendications 9 ou 10, **caractérisé en ce qu'**il comprend une étape d'injection plastique lors de laquelle le boitier (9) et au moins un élément de fixation (3) sont injectés dans un même moule d'injection.

## Patentansprüche

1. Befestigungselement (3; 103) zum Befestigen eines Scheinwerfers (2) an einem Fahrzeug (1), das auf einem horizontalen Boden steht und eine Längsachse (X), eine Querachse (Y) und eine vertikale Achse (Z), die zur Längsachse (X) und zur Querachse (Y) senkrecht ist, definiert, insbesondere eines Scheinwerfers (2) vorn am Fahrzeug (1), wobei das Befestigungselement unter dem Scheinwerfer (2) angeordnet werden kann und ein Sollbruchelement (5; 105) umfasst, das wenigstens einen brechbaren oder verformbaren Bereich aufweist, um, wenn der Scheinwerfer durch das Befestigungselement am Fahrzeug angebracht ist, bei einer Kollision des Fahrzeugs (1), insbesondere bei einem Fußgängeraufprall, eine Verlagerung des Scheinwerfers (2) mit einer in Bezug auf das Fahrzeug (1) vertikal nach unten gerichteten Komponente zu ermöglichen, **dadurch gekennzeichnet, dass** das Befestigungselement (3; 103) eine Befestigungsaufnahme (6; 106) umfasst, die ein Verbindungselement umfasst, das dazu bestimmt ist, das Befestigungselement (3; 103) mit einer Karosserie (8) des Fahrzeugs (1) zu verbinden, wobei das Sollbruchelement (5; 105) oberhalb der Befestigungsaufnahme (6; 106) positioniert ist, derart, dass sich das Sollbruchelement (5; 105) bei der Kollision zur Befestigungsaufnahme (6; 106) hin nach unten bewegt, wobei die Befestigungsaufnahme (6; 106) dann im Anschluss an die Kollision ganz oder teilweise zwischen zwei Seitenwänden (4a, 4b; 104a, 104b) des Sollbruchelements (5; 105) aufgenommen ist.

2. Befestigungselement (3; 103) nach dem vorhergehenden Anspruch, **dadurch gekennzeichnet, dass**, wenn der Scheinwerfer in der durch das Befestigungselement am Fahrzeug angebrachten Position betrachtet wird, das Sollbruchelement (5; 105) eine untere Wand (20; 120) umfasst, von der aus sich zwei Seitenwände (4a, 4b; 104a, 104b) nach oben erstrecken, deren oberes Ende für eine Verbindung mit der Unterseite (9a) des Scheinwerfers (2) geeignet ist, und **dadurch gekennzeichnet, dass** das Sollbruchelement (5; 105) zwei brechbare Bereiche umfasst, die jeweils wenigstens eine Einkerbung (25a, 25b; 125a, 125b) umfassen, die wenigstens einen Brechpunkt des Sollbruchelements (5; 105) bildet, und die jeweils in der Nähe der Verbindungsstelle zwischen einer der Seitenwände (4a, 4b; 104a, 104b) und der unteren Wand (20; 120) angeordnet sind, derart, dass eine Kollision vom Typ eines Fußgängeraufpralls, die von oben auf das Befestigungselement (3; 103) übertragen wird, den Bruch der brechbaren Bereiche verursacht.

3. Befestigungselement (3; 103) nach einem der vorhergehenden Ansprüche, **dadurch gekennzeichnet, dass**, wenn der Scheinwerfer in der durch das Befestigungselement am Fahrzeug angebrachten Position betrachtet wird, das Sollbruchelement (5; 105) umfasst:
- zwei Seitenwände (4a, 4b; 104a, 104b), die im Wesentlichen parallel zu einer in Längsrichtung und vertikal verlaufenden Ebene sind,
- eine untere Wand (20; 120), die im Wesentlichen parallel zu einer horizontalen Ebene ist,
- eine nach vorn gerichtete Öffnung und eine nach hinten gerichtete Öffnung.

4. Befestigungselement (3; 103) nach einem der vorhergehenden Ansprüche, **dadurch gekennzeichnet, dass** das Sollbruchelement (5) profiliert ausgebildet und entlang der Längsachse (X) ausgerichtet ist.

5. Befestigungselement (3; 103) nach einem der vorhergehenden Ansprüche, **dadurch gekennzeichnet, dass**, wenn der Scheinwerfer in der durch das Befestigungselement am Fahrzeug angebrachten Position betrachtet wird, die Befestigungsaufnahme (6) eine nach vorn gerichtete Öffnung und eine nach hinten gerichtete Öffnung umfasst, die entlang der Längsachse (X) ausgerichtet sind, wobei sie einen Einsetzraum zur Aufnahme eines Ansatzes (11) der Karosserie (8) bildet, wobei dieser Ansatz (11) mit dem Verbindungselement zusammenwirken und/oder im Inneren der Befestigungsaufnahme (6) in Längsrichtung gleiten kann, um bei der Kollision des Fahrzeugs (1) und/oder bei der Anbringung des Scheinwerfers (2) am Fahrzeug (1) die Verlagerung des Scheinwerfers (2) nach hinten zu ermöglichen.

6. Befestigungselement (3; 103) nach dem vorhergehenden Anspruch, **dadurch gekennzeichnet, dass**, wenn der Scheinwerfer in der durch das Befestigungselement am Fahrzeug angebrachten Position betrachtet wird, das Verbindungselement der Befestigungsaufnahme (6) wenigstens eine obere Rippe (12) und wenigstens eine untere Rippe (13) umfasst, die sich entlang der Längsachse (X) erstrecken, im Wesentlichen vertikal vorstehen und dem Inneren der Befestigungsaufnahme (6) zugewandt sind, wobei die wenigstens eine obere Rippe (12) dazu bestimmt ist, an einer Oberseite (14) eines Ansatzes (11) zur Anlage zu kommen, und die wenigstens eine untere Rippe (13) dazu bestimmt ist, an einer Unterseite (15) eines solchen Ansatzes (11) zur Anlage zu kommen, um eine starre Verbindung entlang der vertikalen Achse (Z) zwischen der Befestigungsaufnahme (6) und einem Ansatz (11) zu bilden.

7. Befestigungselement (103) nach Anspruch 1 bis 4, **dadurch gekennzeichnet, dass** das Verbindungselement eine Öffnung mit Innengewinde (109) umfasst, die dazu bestimmt ist, mit einer Befestigungsschraube (110) und einem Ansatz (111) der Karosserie (8) zusammenzuwirken, wobei der Ansatz (111) mit einer Öffnung (113) versehen ist.

8. Befestigungselement (3) nach einem der vorhergehenden Ansprüche, **dadurch gekennzeichnet, dass**, wenn der Scheinwerfer in der durch das Befestigungselement am Fahrzeug angebrachten Position betrachtet wird, das Sollbruchelement (5) ein Distanzstück (19) umfasst, das sich in der Form einer Ebene zwischen einer unteren Wand (20) und einer oberen Wand (21) des Sollbruchelements (5) erstreckt, wobei die Ebene die Längsachse (X) umfasst und in Bezug auf die vertikale Achse (Z) geneigt ist, wobei das Distanzstück (19) wenigstens eine Einkerbung (22, 23) an einer Verbindungsstelle des Distanzstücks (19) mit der unteren Wand (20) und/oder der oberen Wand (21) des Sollbruchelements (5) umfasst, die wenigstens einen Brechpunkt des Distanzstücks (19) bildet.

9. Scheinwerfer (2), welcher ein Gehäuse (9) umfasst, das eine Lichtquelle (28) umschließt, **dadurch gekennzeichnet, dass** er ein oder mehrere Befestigungselemente (3; 103) nach einem der vorhergehenden Ansprüche umfasst, das (die) unter dem Gehäuse (9) des Scheinwerfers (2) angeordnet ist (sind).

10. Scheinwerfer (2) nach dem vorhergehenden Anspruch, **dadurch gekennzeichnet, dass** die Befestigungselemente (3) mit wenigstens einem Teil des Gehäuses (9) des Scheinwerfers aus einem Stück geformt sind und/oder von dem Gehäuse (9) verschieden sind und unter dem Gehäuse (9) befestigt sind.

11. Fahrzeug (1), welches eine Karosserie (8) umfasst, **dadurch gekennzeichnet, dass** es einen Scheinwerfer (2) nach einem der Ansprüche 9 oder 10 umfasst, wobei der Scheinwerfer (2) an der Karosserie (8) mittels eines Ansatzes (11; 111) der Karosserie (8) befestigt ist, der mit einer Befestigungsaufnahme (6; 106) eines Befestigungselements (3; 103) nach einem der Ansprüche 1 bis 8 zusammenwirkt.

12. Verfahren zur Herstellung eines Scheinwerfers (2) nach einem der Ansprüche 9 oder 10, **dadurch gekennzeichnet, dass** es einen Schritt des Kunststoffspritzgießens umfasst, in welchem das Gehäuse (9) und wenigstens ein Befestigungselement (3) in ein und demselben Spritzgießwerkzeug spritzgegossen werden.

## Claims

1. Fixing element (3; 103) for fixing a lamp (2) to a vehicle (1) resting on a horizontal surface and defining a longitudinal axis (X), a transverse axis (Y) and a vertical axis (Z) axis perpendicular to the longitudinal axis (X) and the transverse axis (Y)., in particular a lamp (2) at the front of the vehicle (1), the fixing element being able to be arranged below the lamp (2) and comprising a fusible component (5; 105) with at least one breakable or deformable zone to allow, when the lamp is mounted by the fixing element to the vehicle, movement of the lamp (2) with a vertical component downward relative to the vehicle (1) on a collision of the vehicle (1), in particular on collision with a pedestrian **characterized in that** the fixing element (3; 103) comprises a fixing recess (6; 106) with a connecting element intended to connect the fixing element (3; 103) to a body (8) of the vehicle (1), the fusible component (5; 105) being positioned above the fixing recess (6; 106) such that the fusible component (5; 105) descends towards the fixing recess (6; 106) on the collision, the fixing recess (6; 106) then being fully or partially accommodated between two side walls (4a, 4b; 104a, 104b) of the fusible component (5; 105) following the collision.

2. Fixing element (3; 103) according to the preceding claim, **characterized in that**, when considering the lamp mounted by the fixing element to the vehicle, the fusible component (5; 105) comprises a lower wall (20; 120) from which two side walls (4a, 4b; 104a, 104b) extend upward, the upper end of which is suitable for connection with the lower surface (9a) of the lamp (2), and **characterized in that** the fusible component (5; 105) comprises two breakable zones, each comprising at least one notch (25a, 25b; 125a, 125b) forming at least one weak point in the fusible component (5; 105) and arranged respectively near the junction between each side wall (4a, 4b; 104a, 104b) and the lower wall (20; 120), such that a collision of the type caused by collision with a pedestrian, transmitted upward to the fixing element (3; 103), causes a breakage of the breakable zones.

3. Fixing element (3; 103) according to any of the preceding claims, **characterized in that**, when considering the lamp mounted by the fixing element to the vehicle, the fusible component (5; 105) comprises:
- two side walls (4a, 4b; 104a, 104b) substantially parallel to a longitudinal and vertical plane,
- a lower wall (20; 120) substantially parallel to a horizontal plane,
- an opening towards the front and an opening towards the rear.

4. Fixing element (3; 103) according to any of the preceding claims, **characterized in that** the fusible component (5) has a profiled form and is oriented in the longitudinal axis (X).

5. Fixing element (3; 103) according to any of the preceding claim, **characterized in that**, when considering the lamp mounted by the fixing element to the vehicle, the fixing recess (6) comprises an opening towards the front and an opening towards the rear, which are oriented in the longitudinal axis (X) and form an insertion space for receiving an extension piece (11) of the body (8), wherein this extension piece (11) may cooperate with the connecting element and/or slide longitudinally inside the fixing recess (6) to allow the movement of the lamp (2) towards the rear on collision of the vehicle (1) and/or when mounting the lamp (2) of the vehicle (1).

6. Fixing element (3; 103) according to the preceding claim, **characterized in that**, when considering the lamp mounted by the fixing element to the vehicle, the connecting element of the fixing recess (6) comprises at least one upper rib (12) and at least one lower rib (13) extending in the longitudinal axis (X) and protruding substantially vertically, turned towards the inside of the fixing recess (6), wherein the at least one upper rib (12) is intended to come to rest against an upper face (14) of an extension piece (11) and the at least one lower rib (13) is intended to come to rest against a lower face (15) of such an extension piece (11), in order to form a rigid connection in the vertical axis (Z) between the fixing recess (6) and an extension piece (11).

7. Fixing element (103) according to claim 1 to 4, **characterized in that** the connecting element comprises a threaded opening (109) intended to cooperate with a fixing screw (110) and an extension piece (111) of the body (8), the extension piece (111) being provided with an opening (113).

8. Fixing element (3) according to any of the preceding claims, **characterized in that**, when considering the lamp mounted by the fixing element to the vehicle, the fusible component (5) comprises a strut (19) extending in the form of a plane between a lower wall (20) and an upper wall (21) of the fusible component (5), the plane containing the longitudinal axis (X) and being inclined relative to the vertical axis (Z), wherein the strut (19) comprises at least one notch (22, 23) at a junction between the strut (19) and the lower wall (20) and/or the upper wall (21) of the fusible component (5) so as to form at least one weak point of the strut (19).

9. Lamp (2) comprising a housing (9) which contains a light source (28), **characterized in that** it comprises one or more fixing elements (3; 103) according to any of the preceding claims, arranged below the housing (9) of the lamp (2).

10. Lamp (2) according to the preceding claim, **characterized in that** the fixing elements (3) are molded as a single piece with at least one part of the housing (9) of the lamp and/or are separated from the housing (9) and fixed below the housing (9).

11. Vehicle (1) comprising a body (8), **characterized in that** it comprises a lamp (2) according to any of claims 9 or 10, the lamp (2) being fixed to the body (8) by means of an extension piece (11; 111) of the body (8) which cooperates with a fixing recess (6; 106) of a fixing element (3; 103) according to any of claims 1 to 8.

12. Method for producing a lamp (2) according to one of claims 9 or 10, **characterized in that** it comprises a step of plastic injection molding, during which the housing (9) and at least one fixing element (3) are injected in a same injection mold.
